# EUROPEAN PATENT SPECIFICATION

(11) **EP 1 682 885 B1**
(45) Date of publication and mention of the grant of the patent: **21.07.2010**
(21) Application number: 04750085.5
(22) Date of filing: 14.04.2004
(51) Int. Cl.: G01N 30/12

(54) **INTERFACE ASSEMBLY FOR PRE-CONCENTRATING ANALYTES IN CHROMATOGRAPHY**
ANORDNUNG MIT ÜBERGÄNGEN ZUR VORKONZENTRATION VON ANALYTEN BEI DER CHROMATOGRAPHIE
ENSEMBLE INTERFACE SERVANT A PRECONCENTRER DES ANALYTES EN CHROMATOGRAPHIE

(30) Priority: 12.11.2003 US 481626 P; 14.04.2003 US 462731 P
(43) Date of publication of application: 26.07.2006
(60) Divisional application: 07075226.6
(73) Proprietor: PerkinElmer Health Sciences, Inc., Waltham, MA 02451 (US)
(72) Inventor: TIPLER, Andrew, Trumbull, CT 06611 (US); VANDERHOEF, John, H., Stratford, CT 06614 (US); BOTELHO, James, E., Danbury, CT 06810 (US)
(74) Representative: Smith, Norman Ian
(86) International application number: PCT/US2004/011434
(87) International publication number: WO 2005/057145

(56) References cited:
- US-A- 5 711 786
- US-A- 5 872 306
- KLEMP M A ET AL: "CRYOFOCUSING INLET WITH REVERSE FLOW SAMPLE COLLECTION FOR GAS CHROMATOGRAPHY" ANALYTICAL CHEMISTRY, AMERICAN CHEMICAL SOCIETY. COLUMBUS, US, vol. 65, no. 18, 15 September 1993 (1993-09-15), pages 2516-2521, XP000411484 ISSN: 0003-2700
- SANCHEZ J M ET AL: "ON-LINE MULTIBED SORPTION TRAP AND INJECTOR FOR THE GC ANALYSIS OF ORGANIC VAPORS IN LARGE-VOLUME AIR SAMPLES" ANALYTICAL CHEMISTRY, AMERICAN CHEMICAL SOCIETY. COLUMBUS, US, vol. 75, no. 4, 15 February 2003 (2003-02-15), pages 978-985, XP001171132 ISSN: 0003-2700
- LU C-J ET AL: "A DUAL-ABSORBENT PRECONCENTRATOR FOR A PORTABLE INDOOR-VOC MICROSENSOR SYSTEM" ANALYTICAL CHEMISTRY, AMERICAN CHEMICAL SOCIETY. COLUMBUS, US, vol. 73, no. 14, 15 July 2001 (2001-07-15), pages 3449-3457, XP001100443 ISSN: 0003-2700

## Description

### Field Of The Invention

The present invention relates to a system for interfacing devices in chromatography. More specifically, the invention relates to a system for interfacing a sampling device and a chromatograph that preconcentrates the analytes to be measured.

### Background Of The Invention

Chromatography is essentially a physical method of separation in which constituents of a test sample in a carrier gas or liquid are adsorbed or absorbed and then desorbed by a stationary phase material in a column. A pulse of the sample is introduced into a steady flow of carrier gas, which carries the sample into a chromatographic column. The inside of the column is lined with a liquid, and interactions between this liquid and the various elements of the sample-which differ based upon differences among distribution coefficients of the elements-cause the sample to be separated into the respective elements. At the end of the column, the individual components are more or less separated in time. Detection of the gas provides a time-scaled pattern, typically called a chromatogram, that, by calibration or comparison with known samples, indicates the constituents of the test sample. An example of the process by which this occurs is described in U.S. Pat. No. 5,545,252 to Hinshaw.

Often, the sample is first obtained using a sampling device, which subsequently transfers the sample to the chromatograph. One means of obtaining a sample and introducing it into a chromatographic column is known as "headspace sampling." In conventional headspace sampling, sample material is sealed in a vial and subjected to constant temperature conditions for a specified time. Analyte concentrations in the vial gas phase should reach equilibrium with the liquid and/or solid phases during this thermostatting time. The vial is subsequently pressurized with carrier gas to a level greater than the "natural" internal pressure resulting from thermostatting and equilibration. Then the pressurized vial is connected to the chromatographic column in such a way as to allow for the transfer of a portion of the vial gas phase into the column for a short period of time. An example of such a sampling device is disclosed in U.S. Patent No. 4,484,483 to Riegger et. al. An example of a chromatographic system employing such a sampling device is disclosed in U.S. Patent No. 5,711,786 to Hinshaw, which describes using a chromatographic injector between the vial and the chromatographic column.

Typically, it is desired to pre-concentrate the analytes in the sample, and occasionally, remove moisture therefrom, prior to introducing the sample into the chromatographic column. Accordingly, as disclosed in U.S. Patent Nos. 5,792,423 and 6,395,560 to Markelov, these systems will typically include some kind of "trap" for this purpose, which retains the analytes as they are carried through the trap, and which are later released from the trap, usually by heating, and swept into the chromatographic column.

Various types of traps have been suggested to perform this preconcentration (and possible moisture removal) prior to introducing the sample into a chromatographic column. Often, it is advantageous to use an adsorbent trap of some sort to adsorb the analytes, which can later be desorbed, as opposed to an absorbent because, since the anhydrous substance absorbs water, repeated use of the anhydrous substance is likely to be limited and require frequent replacement. Accordingly, numerous arrangements employing an adsorbent trap have been employed for the purpose of pre-concentrating the analytes of a sample extracted by a sampling device such as a headspace sampler. Examples of such arrangements are disclosed in U.S. Patent No. 5,932,482 to Markelov and U.S. Patent No. 6,652,625 to Tipler.

However, to date, these systems have resulted in a number of disadvantages. First, in order to accomplish this multiple stage process of extracting a sample fluid, transferring it to the trap, trapping it and untrapping it, and transferring it to the chromatographic column, these systems have employed complex assemblies of parts and/or valves situated in the flow path of the fluid containing the analytes to be measured. These extra devices and valves not only increase cost and space, but increase dead-volume areas and surface active sites. This results in sample dispersion, dilution, or loss, and causes excessive peak broadening on the chromatogram. Another disadvantage present in some of these systems is the uni-directional path of flow for both adsorption and desorption, inhibiting the ability to first trap heavier compounds and then more volatile compounds by using multiple adsorbents.

What is desired, therefore, is a system for interfacing a sampling device and a chromatograph and for pre-concentrating analytes in a sample prior to introducing the sample into the chromatographic column that is inexpensive to manufacture and does not take up a lot of space. What is further desired is a system for interfacing a sampling device and a chromatograph and for pre-concentrating analytes in a sample prior to introducing the sample into the chromatographic column that reduces the amount of dead volume areas and surface active sites. What is also desired is a system for interfacing a sampling device and a chromatograph and for pre-concentrating analytes in a sample prior to introducing the sample into the chromatographic column that facilitates the use of multiple adsorbents.

US 5872306 describes an analysis system which captures and accumulates a trace vapor sample, retains the sample against a demand for delivery to a gas chromatography column for separation, separates the sample through the column into sample components and analyses the components in a mass spectrometer. The system is arranged so that there are no valves in the sample path.

### Summary of the Invention

An object of the present invention is to provide a system for interfacing a sampling device and a chromatograph and for pre-concentrating analytes in a sample prior to introducing the sample and into the chromatographic column that minimizes the use of extra devices to trap and transfer the analytes in the sample to be measured.

According to the present invention there is provided an interface assembly for pre-concentrating analytes in chromatography, comprising: an interface housing having a first end and a second end, wherein the first end is adapted to be coupled to a sampling device and the second end is adapted to be coupled to a chromatograph, and wherein said interface housing has a first flow channel; an adsorbent housing connected to said interface housing, said adsorbent housing having a second flow channel, an inlet in fluid communication with the second flow channel, and an outlet in fluid communication with the second flow channel; a first valveless conduit through which fluid is communicated between the sampling device and the first flow channel; a second valveless conduit through which fluid is communicated between the first flow channel and the second flow channel; a third valveless conduit through which fluid is communicated from said first flow channel to the chromatograph; at least one adsorbent disposed in said second flow channel such that said adsorbent adsorbs analytes when fluid carrying the analytes flows through the second valveless conduit, through the second flow channel, and through the outlet, and said adsorbent desorbs the analytes when fluid flows through the inlet, through the second flow channel, and through the second valveless conduit, and a headspace sampler for extracting a sample from a vessel, wherein: said headspace sampler has a sample chamber for receiving the sample after extracting the sample from the vessel; and said first valveless conduit comprises a conduit between the sample chamber and the first flow channel.

### Brief Description of the Drawings

Figure 1 is a cross-sectional, exploded view of an interface assembly for pre-concentrating analytes in accordance with invention.
Figure 2 is a schematic view of the interface assembly of Figure 1 in use with a headspace sampler and a chromatographic column during the vessel pressurization stage.
Figure 3 is a schematic view of the interface assembly of Figure 2 during the trap load stage.
Figure 4 is a schematic view of the interface assembly of Figure 2 during the trap purge stage.
Figure 5 is a schematic view of the interface assembly of Figure 2 during the trap desorption stage.
Figure 6 is a schematic view of the interface assembly of Figure 2 during the system maintenance stage.

### Detailed Description Of The Drawings

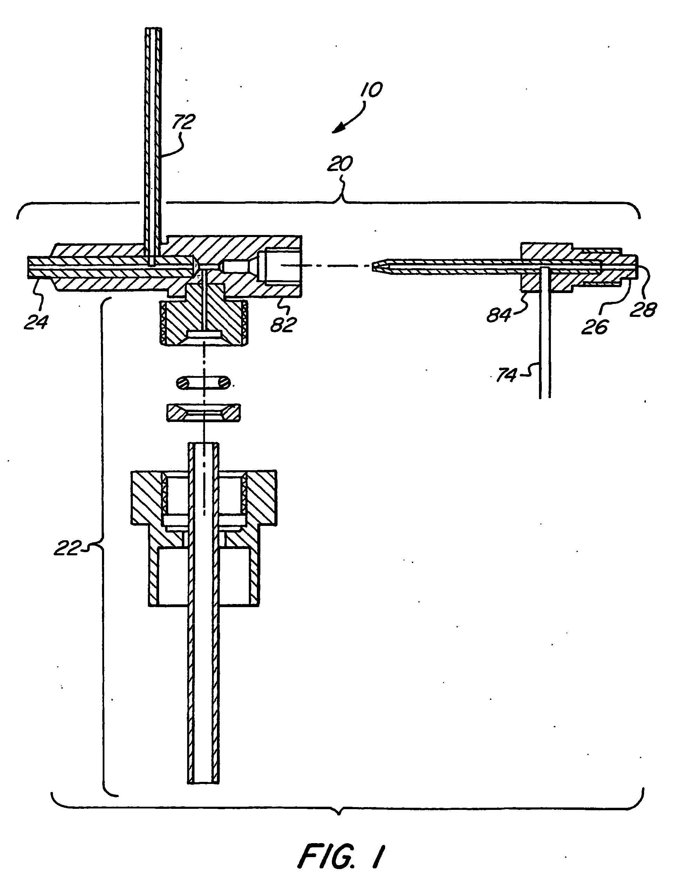

The basic components of one embodiment of an interface assembly for pre-concentrating analytes 10 in accordance with the invention are illustrated in Figure 1. As used in the description, the terms "top," "bottom," "above," "below," "over," "under," "on top," "underneath," "up," "down," "upper," "lower," "front," "rear," "forward" and "back" refer to the objects referenced when in the orientation illustrated in the drawings, which orientation is not necessary for achieving the objects of the invention.

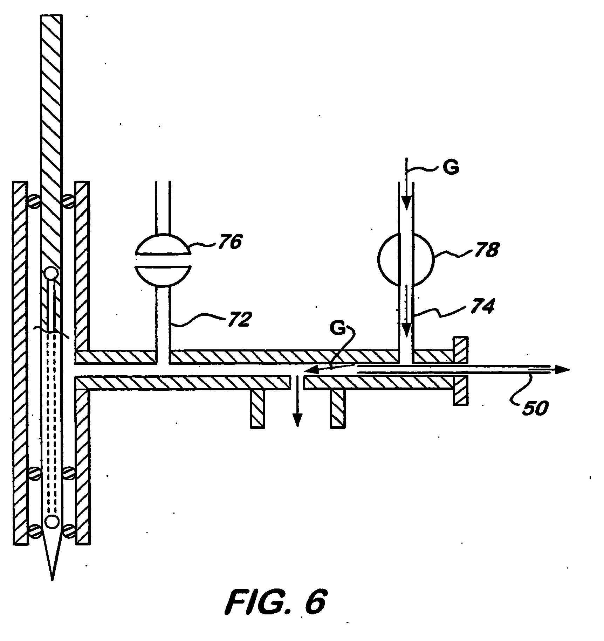

The interface assembly 10 includes an interface housing 20 and an adsorbent housing 22 connected thereto. In certain advantageous embodiments, the interface housing 20 and the adsorbent housing 22 have corresponding threaded portions so that the adsorbent housing 22 can be easily connected to and removed from the system (as shown in Figure 6). However, in other embodiments, the adsorbent housing 22 may be connected to the system via any other means providing an adequate seal such that fluid leakage does not occur, and in some cases, the adsorbent housing 22 is even integrally formed with the interface housing 20.

The interface housing 10 has a first end 24 and a second end 26. The first end 24 is adapted to be coupled to sampling device, such as, for example, a headspace sampler. The second end 26 is adapted to be coupled to a chromatograph. This may be accomplished, for example, by the use of a column port 28 in the interface housing 20 for receiving the end of a chromatographic column.

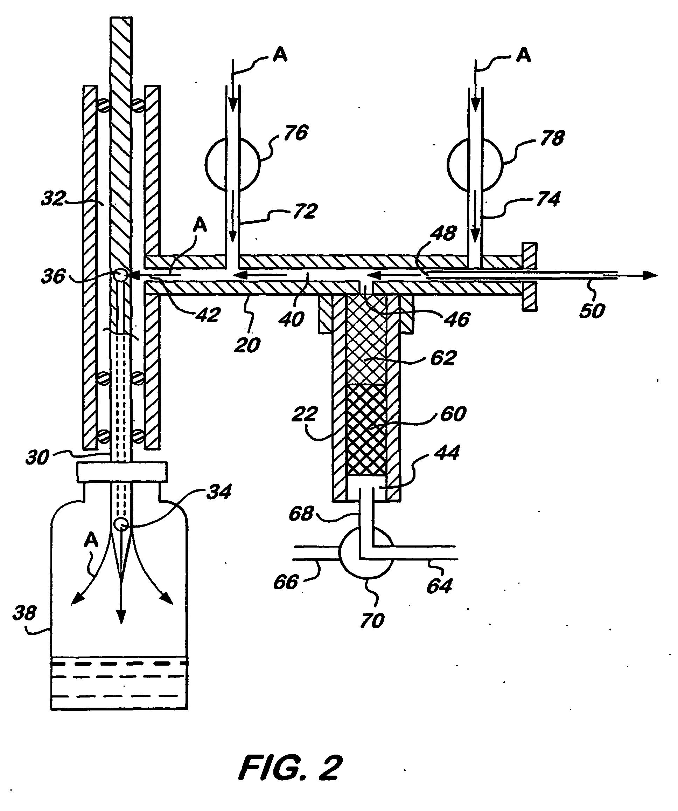

The sampling device to which the first end 24 of the interface housing 20 is coupled will typically include some vessel or area for holding and/or extracting a sample containing analytes to be measured. For example, referring to Figure 2, the sampling device may include a sampling needle 30 and a sample chamber 32, where the sampling needle has a vessel port 34 through which fluid is communicated between the needle 30 and a vessel 38 and a sample chamber port 36 through which fluid is communicated between the needle 30 the sample chamber 32.

The interface housing 20 has a first flow channel 40 therein, and a first valveless conduit 42 permits fluid to be communicated between the sample chamber 32 and first flow channel 40. The adsorbent housing 22 has a second flow channel 44, and a second valveless conduit 46 permits fluid to be communicated between the first flow channel 40 and the second flow channel 44.

As noted above, in some embodiments, the interface housing 20 has a column port 28 for receiving the end of a chromatographic column 50. A third valveless conduit 48 permits fluid to be communicated between the first flow channel 40 and the column 50. The third valveless conduit 48 may comprise a channel of the column port 28 that is in fluid communication with the first flow channel 40 and is especially adapted for receiving the end of the column 50, or it may comprise a portion of the first flow channel 40 adjacent to the end of the column 50, or it may simply be the end of the column 50 itself.

At least one adsorbent 60 is disposed in the second flow channel 44 in order to adsorb the analytes in the sample as the sample fluid passes through the second valveless conduit 46 and down through the second flow channel 44. In certain advantageous embodiments, a weaker adsorbent 62 is positioned between the second valveless conduit 46 and the adsorbent 60. Accordingly, as the sample fluid passes through the second valveless conduit 46 and down through the second flow channel 44, the weaker adsorbent 62 first adsorbs the heavier compounds, and the stronger adsorbent 60 then adsorbs the more volatile compounds in the sample.

In some embodiments, the adsorbents 60, 62 are hydrophobic, thereby allowing moisture to be easily purged from the system by a carrier gas, as further explained below. In certain advantageous embodiments, graphitized carbon black is used as an adsorbent. In some embodiments, a polymeric adsorbent is used. In certain embodiments, a carbon molecular sieve is used.

In some embodiments, the adsorbent housing 22 is temperature controllable. Accordingly, the housing 22 can be heated to desorb analytes that have been retained by the adsorbents 60, 62 before a fluid sweeps them out of the housing 22 and into the column 50.

The adsorbent housing 22 has an inlet 64 and an outlet 66. In certain advantageous embodiments, the inlet 64 and outlet 66 both communicate with the second flow channel 44 via a common passage 68, and a single valve 70 switches between the inlet 64 and the outlet 66. However, in other embodiments, separate passages and valves are used to provide for the inlet and outlet of fluid to and from the second flow channel 44.

The interface housing 20 has a first inlet 72 for generally providing needed fluid to the system. For instance, the first inlet 72 may provide carrier gas to different parts of the system at different stages of operation, such as, for example, by providing the sampling device with fluid to pressurize the vessel 38, or, as another example, by providing carrier gas to the adsorbent housing 22 to carry a sample containing analytes thereto or to sweep away moisture contained therein. The interface housing 20 also has a second inlet 74 for providing fluid that may be used by various parts of the system at various stages, but primarily for isolating the chromatographic column 50 from the rest of the system in order to keep fluid from entering the column 50 until it is specifically desired to desorb the analytes thereinto. Valves 76, 78 are provided to open and close inlets 72, 74, respectively.

In some embodiments, the interface housing 22 has first and second portions 82, 84 (as shown in Figure 1), which can be coupled together, where the first portion 82 includes the first inlet 72 and the second portion 84 includes the second inlet 74. It should be noted that, in these and other embodiments, the first flow channel 40 may be comprised of multiple sub-channels in various interface housing portions (such as portions 82, 84), and of varying shapes and thicknesses, which, in conjunction, form a continuous channel.

Operation of the above described assembly is illustrated stepwise in Figures 2-6. A pressurization step is illustrated in Figure 2. As shown therein, the sampling needle descends into the vessel 38, bringing the vessel port 34 into fluid communication with the interior of the vessel 38. The inlets 76, 78, and 64 are all open, sending fluid into the sample chamber 32, through the chamber port 36, down through the needle 30, and into the vessel 38 (indicated by arrows A). In this way, the vessel is pressurized.

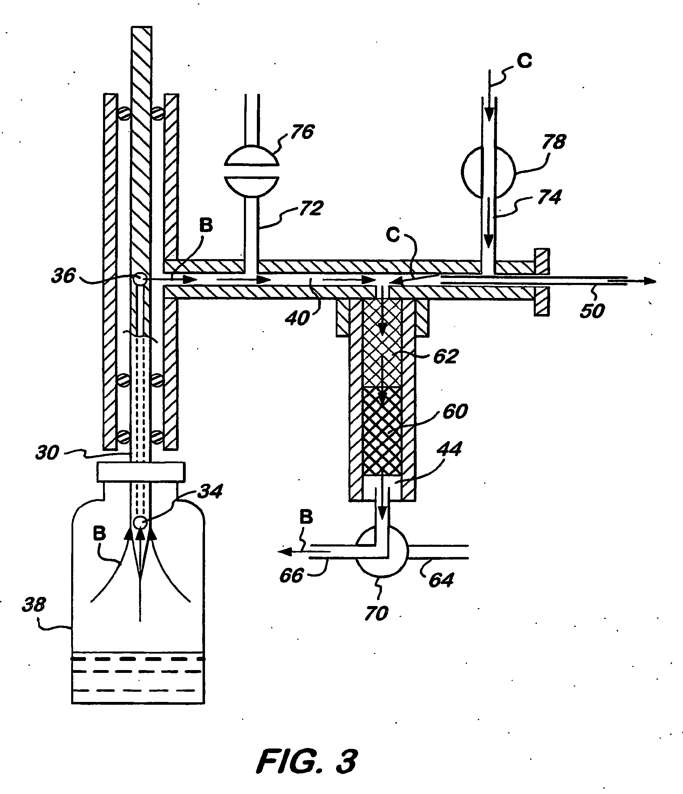

A trap load step is illustrated in Figure 3. As shown therein, the inlet valve 76 is closed, terminating the supply of fluid from the inlet 72. Likewise, the valve 70 terminates the supply of fluid from inlet 64, and opens the outlet 66. As a result, fluid containing the analytes to be measured elute from the vessel 38 through the vessel port 34, through the needle 30, out the chamber port 36, into the first flow channel 40, into the second flow channel 44 and through the adsorbents 62, 60, which adsorb the analytes before the fluid is discharged through the outlet 66 (indicated by arrows B). The inlet valve 78 remains open, allowing fluid to continue to enter through the inlet 74 and isolate the column 50 (indicated by arrows C).

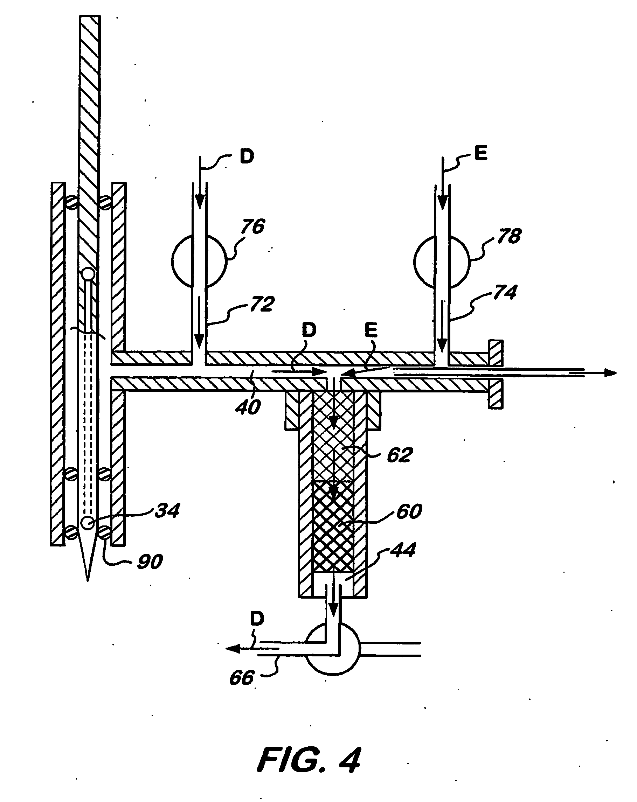

In embodiments where a significant amount of moisture is present in the sample being analyzed, a dry purge step may be desired, which is illustrated in Figure 4. As shown, the needle 30 is withdrawn from the vessel 38, bringing the vessel port 34 above the seal 90. The inlet valve 76 is opened again, thereby allowing fluid to once again enter the system via the inlet 72. The fluid flows into the first flow channel 40, into the second flow channel 44 and through the adsorbents 62, 60, sweeping any moisture therein out through the outlet 66 (indicated by arrows D). Once again, the inlet valve 78 remains open, allowing fluid to continue to enter through the inlet 74 and isolate the column 50 (indicated by arrows E).

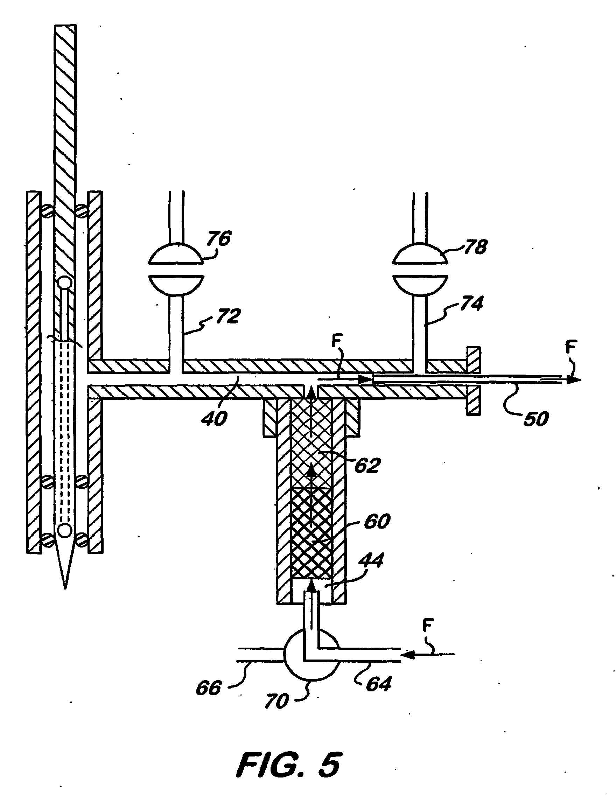

A desorption step is illustrated in Figure 5. As shown therein, the valves 76, 78 are closed, terminating the supply of fluid from inlets 72, 74. The valve 70 closes the outlet 66 and re-opens the inlet 64. The adsorbent housing 22 is heated to desorb the analytes retained by the adsorbents 62, 60. Fluid enters through the inlet 64, flows into the second flow chamber 44, sweeping the desorbed analytes into the first flow chamber 40 and into the chromatographic column 50 (indicated by arrows F).

Figure 6 illustrates an arrangement for system maintenance when the sampling device or the adsorbent housing 22 is disconnected from the interface housing 20. As shown therein, the valve 76 remains closed. The inlet valve 78 remains open, allowing fluid to enter through the inlet 74 and flow past the inlet of the column 50 to prevent ambient air from entering the column (indicated by arrows G).

In certain advantageous embodiments, the first flow channel 40 will have a very small inner diameter in order to minimize the surface area over which the sample containing the analytes flows and to help prevent any flow resulting from dispersion that may otherwise flow back towards the sample chamber 32 during the trap desorption stage illustrated in Figure 5. In some embodiments, this inner diameter is between 0.1 and 1.0 mm, and in certain advantageous embodiments, is about 0.5 mm.

It should be understood that the foregoing is illustrative and not limiting, and that obvious modifications may be made by those skilled in the art. Accordingly, reference should be made primarily to the accompanying claims, rather than the foregoing specification, to determine the scope of the invention.

## Claims

1. An interface assembly for pre-concentrating analytes in chromatography, comprising:
an interface housing (20) having a first end (24) and a second end (26), wherein the first end is adapted to be coupled to a sampling device and the second end is adapted to be coupled to a chromatograph, and wherein said interface housing has a first flow channel (40);
an adsorbent housing (22) connected to said interface housing, said adsorbent housing having a second flow channel (44), an inlet (64) in fluid communication with the second flow channel, and an outlet (66) in fluid communication with the second flow channel ;
a first valveless conduit (42) through which fluid is communicated between the sampling device and the first flow channel;
a second valveless conduit (46) through which fluid is communicated between the first flow channel and the second flow channel;
a third valveless conduit (48) through which fluid is communicated from said first flow channel to the chromatograph; **characterised by**
at least one adsorbent (60) disposed in said second flow channel (44) such that said adsorbent adsorbs analytes when fluid carrying the analytes flows through the second valveless conduit, through the second flow channel, and through the outlet, and said adsorbent desorbs the analytes when fluid flows through the inlet, through the second flow channel, and through the second valveless conduit, and
a headspace sampler for extracting a sample from a vessel, wherein:
said headspace sampler has a sample chamber (32) for receiving the sample after extracting the sample from the vessel; and
said first valveless conduit (42) comprises a conduit between the sample chamber and the first flow channel (40).

2. An interface assembly for pre-concentrating analytes as claimed in claim 1, further comprising a chromatographic column (50) having an end disposed in the first flow channel, wherein said third valveless conduit comprises the end of the chromatographic column.

3. An interface assembly for pre-concentrating analytes as claimed in claim 1, further comprising:
a first fluid pathway in which fluid flows through the first valveless conduit (42), through the first flow channel (40), through the second valveless conduit (46), through the second flow channel (44), and through the outlet (66) ; and
a second fluid pathway in which fluid flows through the inlet (64) , through the second flow channel (44), through the second valveless conduit (46), through the first flow channel (40), and through the third valveless conduit (48).

4. An interface assembly for pre-concentrating analytes as claimed in claim 3, wherein said interface housing includes first and second inlets (72, 74) in fluid communication with the first flow channel (40).

5. An interface assembly for pre-concentrating analytes as claimed in claim 4, wherein:
said interface housing comprises a first portion and a second portion;
said first portion (82) includes the first inlet (72); and
said second portion (84) includes the second inlet (74).

6. An interface assembly for pre-concentrating analytes as claimed in claim 1, wherein said headspace sampler includes
a sampling needle (30) with a vessel port (34) in fluid communication with the vessel (38) and chamber port (36) in fluid communication with the sample chamber (32);
and assembly includes a chromatographic column (50) coupled to the second end of the interface housing (20); and
a plurality of valves (76, 78) for opening and closing the first and second inlets (72, 74) of said interface housing, the inlet of the adsorbent housing (22), and the outlet of the adsorbent housing;
wherein:
when the vessel port (34) of the sampling needle is positioned in the vessel (38), the outlet (66) of the adsorbent housing is closed, and the first and second inlets (72, 74) of the interface housing (20) and the inlet (64) of the adsorbent housing (22) are open, fluid flows into the vessel and pressurizes the vessel ;
when the vessel port (34) of the sampling needle is positioned in the vessel, the first inlet (72) of the interface housing (20) and the inlet (64) of the adsorbent housing (22) are closed, and the second inlet (74) of the interface housing (20) and the outlet (66) of the adsorbent housing (22) are open, fluid flows from the sampling device, into the first flow channel, into the second flow channel, where the adsorbent adsorbs the analytes in the fluid, and out through the outlet;
when the vessel port (34) of the sampling needle is positioned within the sample chamber, the inlet (64) of the adsorbent housing (22) is closed, and the first and second inlets (72, 74) of the interface housing (20) and the outlet (66) of the adsorbent housing (22) are open, carrier gas flows into the first flow channel, into the second flow channel, where moisture is carried away by the carrier gas, and out through the outlet; and when the vessel port of the sampling needle is positioned within the sample chamber, the first and second inlets of the interface housing and the outlet of the adsorbent housing is closed, and the inlet of the adsorbent housing is open, fluid flows into the second flow channel, where the analytes are desorbed, into the first flow channel, and into the chromatographic column.

7. An interface assembly for pre-concentrating analytes as claimed in claim 1, further comprising:
a passage through which fluid is communicated from the second flow channel (44) to the outlet (66) of the adsorbent housing (22), and through which fluid is communicated from the inlet (64) of the adsorbent housing to the second flow channel (44); and
a valve located in said passage for switching between the inlet and outlet of the adsorbent housing.

8. An interface assembly for pre-concentrating analytes as claimed in claim 1, wherein said interface housing (20) and said adsorbent housing (22) have corresponding threaded portions for connecting said adsorbent housing to said interface housing.

9. An interface assembly for pre-concentrating analytes as claimed in claim 1, wherein said adsorbent housing (22) is integrally formed with said interface housing (20).

10. An interface assembly for pre-concentrating analytes as claimed in claim 1, wherein said adsorbent housing (22) is temperature-controllable.

11. An interface assembly for pre-concentrating analytes as claimed in claim 1, wherein said at least one adsorbent (60) is hydrophobic.

12. An interface assembly for pre-concentrating analytes as claimed in claim 11, wherein said at least one adsorbent (60) comprises carbon black.

13. An interface assembly for pre-concentrating analytes as claimed in claim 11, wherein said at least one adsorbent (60) comprises a polymeric adsorbent.

14. An interface assembly for pre-concentrating analytes as claimed in claim 11, wherein said at least one adsorbent (60) comprises a carbon molecular sieve.

15. An interface assembly for pre-concentrating analytes as claimed in claim 1, wherein:
said at least one adsorbent comprises first and second adsorbents (60, 62);
said second adsorbent (62) is stronger than said first adsorbent (60); and
said first adsorbent is disposed between said second valveless conduit and said second adsorbent.

16. An interface assembly for pre-concentrating analytes as claimed in claim 1, wherein the first flow channel (40) has a diameter between 0.1 and 1.0 mm.

17. An interface assembly for pre-concentrating analytes as claimed in claim 14, wherein the first flow channel (40) has a diameter of about 0.5 mm.

## Patentansprüche

1. Schnittstellenanordnung zur Vorkonzentration von Analyten bei der Chromatographie, umfassend:
ein Schnittstellengehäuse (20), aufweisend ein erstes Ende (24) und ein zweites Ende (26), wobei das erste Ende geeignet ist, um an eine Probenentnahmevorrichtung gekoppelt zu werden, und das zweite Ende dazu geeignet ist, an einen Chromatographen gekoppelt zu werden, und wobei das Schnittstellengehäuse einen ersten Strömungskanal (40) aufweist;
ein Adsorbergehäuse (22), verbunden mit dem Schnittstellengehäuse, wobei das Adsorbergehäuse einen zweiten Strömungskanal (44), einen Einlass (64) in Fluidverbindung mit dem zweiten Strömungskanal und einen Auslass (66) in Fluidverbindung mit dem zweiten Strömungskanal aufweist;
einen ersten ventillosen Kanal (42), durch welchen Fluid zwischen der Probenentnahmevorrichtung und dem ersten Strömungskanal übermittelt wird;
einen zweiten ventillosen Kanal (46), durch welchen Fluid zwischen dem ersten Strömungskanal und dem zweiten Strömungskanal übermittelt wird;
einen dritten ventillosen Kanal (48), durch welchen Fluid von dem ersten Strömungskanal zu dem Chromatographen übermittelt wird; **gekennzeichnet durch**:
zumindest einen Adsorber (60), angeordnet in dem zweiten Strömungskanal (44), so dass der Adsorber Analyte adsorbiert, wenn Fluid, welches die Analyte mitführt, **durch** den zweiten ventillosen Kanal, **durch** den zweiten Strömungskanal und **durch** den Auslass strömt, und dass der Adsorber die Analyte desorbiert, wenn Fluid **durch** den Einlass, **durch** den zweiten Strömungskanal und **durch** den zweiten ventillosen Kanal strömt, und
einen Kopfraum-Probennehmer zur Extraktion einer Probe von dem Behälter, wobei:
der Kopfraum-Probennehmer eine Probenkammer (32) aufweist zur Aufnahme der Probe nach der Extraktion der Probe aus dem Behälter; und
wobei der erste ventillose Kanal (42) einen Kanal zwischen der Probenkammer und dem ersten Strömungskanal (40) umfasst.

2. Schnittstellenanordnung zur Vorkonzentration von Analyten gemäß Anspruch 1, weiter umfassend eine chromatographische Säule (50), die ein Ende aufweist, das in dem ersten Strömungskanal angeordnet ist, wobei der dritte ventillose Kanal das Ende der chromatographischen Säule umfasst.

3. Schnittstellenanordnung zur Vorkonzentration von Analyten gemäß Anspruch 1, weiter umfassend:
einen ersten Fluidpfad, in welchem Fluid durch den ersten ventillosen Kanal (42), durch den ersten Strömungskanal (40), durch den zweiten ventillosen Kanal (46), durch den zweiten Strömungskanal (44) und durch den Auslass (66) strömt; und
einen zweiten Fluidpfad, in welchem Fluid durch den Einlass (64), durch den zweiten Strömungskanal (44), durch den zweiten ventillosen Kanal (46), durch den ersten Strömungskanal (40) und durch den dritten ventillosen Kanal (48) strömt.

4. Schnittstellenanordnung zur Vorkonzentration von Analyten gemäß Anspruch 3, wobei das Schnittstellengehäuse erste und zweite Einlässe (72, 74) in Fluidverbindung mit dem ersten Strömungskanal (40) enthält.

5. Schnittstellenanordnung zur Vorkonzentration von Analyten gemäß Anspruch 4, wobei:
das Schnittstellengehäuse einen ersten Bereich und einen zweiten Bereich umfasst;
der erste Bereich (82) den ersten Einlass (72) enthält; und
der zweite Bereich (84) den zweiten Einlass (74) enthält.

6. Schnittstellenanordnung zur Vorkonzentration von Analyten gemäß Anspruch 1, wobei der Kopfraum-Probennehmer enthält:
eine Probenentnahmenadel (30) mit einem Behälteranschluss (34) in Fluidverbindung mit dem Behälter (38) und einem Kammeranschluss (36) in Fluidverbindung mit der Probenkammer (32);
und wobei die Anordnung eine chromatographische Säule (50) enthält, die an das zweite Ende des Schnittstellengehäuses (10) gekoppelt ist; und
eine Mehrzahl von Ventilen (76, 78) zum Öffnen und Schließen der ersten und zweiten Einlässe (72, 74) des Schnittstellengehäuses, des Einlasses des Adsorbergehäuses (22) und des Auslasses des Adsorbergehäuses; wobei:
wenn der Behälteranschluss (34) der Probenentnahmenadel in dem Behälter (38) positioniert ist, der Auslass (66) des Adsorbergehäuses geschlossen ist und die ersten und zweiten Einlässe (72, 74) des Schnittstellengehäuses (20) und der Einlass (64) des Adsorbergehäuses (22) offen sind, Fluid in den Behälter strömt und den Behälter mit Druck beaufschlagt;
wenn der Behälteranschluss (34) der Probenentnahmenadel in dem Behälter positioniert ist, der erste Einlass (72) des Schnittstellengehäuses und der Einlass (64) des Adsorbergehäuses (22) geschlossen sind und der zweite Einlass (74) des Schnittstellengehäuses (20) und der Auslass (66) des Adsorbergehäuses (22) offen sind, Fluid von der Probenentnahmevorrichtung in den ersten Strömungskanal, in den zweiten Strömungskanal, wo der Adsorber die Analyte in dem Fluid adsorbiert, und durch den Auslass heraus strömt;
wenn der Behälteranschluss (34) der Probenentnahmenadel innerhalb der Probenkammer positioniert ist, der Einlass (64) des Adsorbergehäuses (22) geschlossen ist und die ersten und zweiten Einlässe (72, 74) des Schnittstellengehäuses (20) und der Auslass (66) des Adsorbergehäuses (22) offen sind, Trägergas in den ersten Strömungskanal, in den zweiten Strömungskanal, wo Dampf mittels des Trägergases wegbefördert wird, und durch den Auslass heraus strömt; und wenn der Behälteranschluss der Probenentnahmenadel innerhalb der Probenkammer positioniert ist, die ersten und zweiten Einlässe des Schnittstellengehäuses und der Auslass des Adsorbergehäuses geschlossen sind und der Einlass des Adsorbergehäuses offen ist, Fluid in den zweiten Strömungskanal, wo die Anlayte desorbiert werden, in den ersten Strömungskanal und in die chromatographische Säule strömt.

7. Schnittstellenanordnung zur Vorkonzentration von Analyten gemäß Anspruch 1, weiter umfassend:
einen Durchgang, durch welchen Fluid von dem zweiten Strömungskanal (44) zu dem Auslass (66) des Adsorbergehäuses (22) übermittelt wird und durch welchen Fluid von dem Einlass (64) des Adsorbergehäuses zu dem zweiten Strömungskanal (44) übermittelt wird; und
ein in dem Durchhang lokalisiertes Ventil zum Schalten zwischen dem Einlass und dem Auslass des Adsorbergehäuses.

8. Schnittstellenanordnung zur Vorkonzentration von Analyten gemäß Anspruch 1, wobei das Schnittstellengehäuse (20) und das Adsorbergehäuse (22) korrespondierende Gewindebereiche aufweisen zur Verbindung des Adsorbergehäuses mit dem Schnittstellengehäuse.

9. Schnittstellenanordnung zur Vorkonzentration von Analyten gemäß Anspruch 1, wobei das Adsorbergehäuse (22) integral mit dem Schnittstellengehäuse (20) ausgebildet ist.

10. Schnittstellenanordnung zur Vorkonzentration von Analyten gemäß Anspruch 1, wobei das Adsorbergehäuse (22) temperatur-regelbar ist.

11. Schnittstellenanordnung zur Vorkonzentration von Analyten gemäß Anspruch 1, wobei zumindest ein Adsorber (60) hydrophob ist.

12. Schnittstellenanordnung zur Vorkonzentration von Analyten gemäß Anspruch 11, wobei der zumindest eine Adsorber (60) Ruß umfasst.

13. Schnittstellenanordnung zur Vorkonzentration von Analyten gemäß Anspruch 11, wobei der zumindest eine Adsorber (60) einen polymeren Adsorber umfasst.

14. Schnittstellenanordnung zur Vorkonzentration von Analyten gemäß Anspruch 11, wobei der zumindest eine Adsorber (60) ein Kohlenstoffmolekularsieb umfasst.

15. Schnittstellenanordnung zur Vorkonzentration von Analyten gemäß Anspruch 1, wobei:
der zumindest eine Adsorber erste und zweite Adsorber (60, 62) umfasst;
der zweite Adsorber (62) stärker als der erste Adsorber (60) ist;
der erste Adsorber zwischen dem zweiten ventillosen Kanal und dem zweiten Adsorber angeordnet ist.

16. Schnittstellenanordnung zur Vorkonzentration von Analyten gemäß Anspruch 1, wobei der erste Strömungskanal (40) einen Durchmesser zwischen 0,1 und 1,0 mm aufweist.

17. Schnittstellenanordnung zur Vorkonzentration von Analyten gemäß Anspruch 14, wobei der erste Strömungskanal (40) einen Durchmesser von ungefähr 0,5 mm hat.

## Revendications

1. Montage d'interface pour la pré-concentration de substances à analyser en chromatographie, comprenant :
- un bâti (20) d'interface ayant une première extrémité (24) et une seconde extrémité (26), dans lequel la première extrémité est apte à être couplée à un dispositif d'échantillonnage et la seconde extrémité est apte à être couplée à un chromatographe, et dans lequel ledit bâti d'interface comprend un premier conduit (40) d'écoulement ;
- un bâti (22) adsorbant, relié au bâti d'interface, ledit bâti absorbant comprenant un deuxième conduit (44) d'écoulement, une entrée (64) en communication fluidique avec le deuxième conduit d'écoulement, et une sortie (66) en communication fluidique avec le deuxième conduit d'écoulement ;
- un premier conduit (42) sans soupape via lequel du fluide est mis en communication entre le dispositif d'échantillonnage et le premier conduit (40) d'écoulement ;
- un deuxième conduit (46) sans soupape via lequel du fluide est mis en communication entre le premier conduit (40) d'écoulement et le deuxième conduit (44) d'écoulement ;
- un troisième conduit (48) sans soupape via lequel du fluide est mis en communication depuis ledit premier conduit (40) d'écoulement vers le chromatographe ;
**caractérisé par** ;
- au moins un adsorbant (60) disposé dans ledit second conduit (44) d'écoulement de manière que l'adsorbant adsorbe la substance à analyser lorsque le fluide transportant cette substance s'écoule au travers du deuxième conduit sans soupape, au travers du deuxième conduit d'écoulement, et au travers de la sortie, et ledit adsorbant désorbe la substance lorsque le fluide s'écoule au travers de l'entrée (64), via le deuxième conduit d'écoulement, et au travers du deuxième conduit sans soupape ;
- un échantillonneur espace de tête pour extraire un échantillon d'un récipient, dans lequel :
- ledit échantillonneur espace de tête comprend une chambre d'échantillonnage (32) pour recevoir l'échantillon après son extraction du récipient ; et
- ledit premier conduit (42) sans soupape comprend un conduit entre la chambre d'échantillonnage et le premier conduit (40) d'écoulement.

2. Montage d'interface pour la pré-concentration de substances à analyser selon la revendication 1, comprenant en outre une colonne de chromatographie (50) ayant une extrémité disposée dans ledit premier conduit d'écoulement, dans lequel ledit troisième conduit sans soupape comprend l'extrémité de la colonne de chromatographie.

3. Montage d'interface pour la pré-concentration de substances à analyser selon la revendication 1, comprenant en outre :
- un premier chemin fluidique dans lequel le fluide s'écoule via le premier conduit (42) sans soupape, via le premier conduit (40) d'écoulement, via le deuxième conduit (46) sans soupape, via le deuxième conduit (44) d'écoulement, et via la sortie (66), et
- un deuxième chemin fluidique dans lequel le fluide s'écoule via l'entrée (64), via le deuxième conduit (44) d'écoulement, via le deuxième conduit (46) sans soupape, via le premier conduit (40) d'écoulement, et via le troisième conduit (48) sans soupape.

4. Montage d'interface pour la pré-concentration de substances à analyser selon la revendication 3, dans lequel ledit bâti d'interface comprend une première et une seconde entrées (72, 74) en communication fluidique avec le premier conduit (40) d'écoulement.

5. Montage d'interface pour la pré-concentration de substances à analyser selon la revendication 4, dans lequel :
- Ledit bâti d'interface comprend une première portion et une deuxième portion ;
- Ladite première portion (82) inclut la première entrée (72) ;
- Et la deuxième portion (84) inclut la deuxième entrée (74).

6. Montage d'interface pour la pré-concentration de substances à analyser selon la revendication 1, dans lequel ledit échantillonneur espace de tête comprend
- Une aiguille (30) d'échantillonnage avec un port (34) de récipient en communication fluidique avec le récipient (38) et un port (36) de chambre en communication fluidique avec la chambre (32) d'échantillonnage ;
- Un montage comprenant une colonne (50) de chromatographie couplée à la deuxième extrémité du bâti (20) d'interface ; et
- Plusieurs soupapes (76, 78) pour ouvrir et fermer la première et la seconde entrées (72, 74) dudit bâti d'interface, l'entrée du bâti (22) adsorbant, et la sortie du bâti adsorbant ;
dans lequel :
lorsque le port (30) de récipient de l'aiguille d'échantillonnage est positionné dans le récipient (38), que la sortie (66) du bâti adsorbant est fermée, et que les première et deuxième entrées (72, 74) du bâti (20) d'interface et l'entrée (64) du bâti (22) adsorbant sont ouvertes, le fluide s'écoule dans le récipient et le pressurise ;
lorsque le port (34) de récipient de l'aiguille d'échantillonnage est positionné dans le récipient, que la première entrée (72) du bâti (20) d'interface et l'entrée (64) du bâti (22) adsorbant sont fermées, et que la deuxième entrée (74) du bâti (20) d'interface et la sortie (66) du bâti (22) adsorbant sont ouvertes, le fluide s'écoule depuis le dispositif d'échantillonnage, dans le premier conduit d'écoulement, dans le deuxième conduit d'écoulement, où l'adsorbant adsorbe la substance à analyser dans le fluide, et s'échappe par la sortie ;
lorsque le port (34) de récipient de l'aiguille d'échantillonnage est positionnée dans la chambre d'échantillonnage, que l'entrée (64) du bâti (22) adsorbant est fermée, et que les première et deuxième entrées (72, 74) du bâti (20) d'interface et la sortie (66) du bâti adsorbant (22) sont ouvertes, du gaz porteur s'écoule dans le premier conduit d'écoulement, dans le deuxième conduit d'écoulement, où de la moisissure est emportée par le gaz porteur, et s'échappe par la sortie ; et lorsque le port de récipient de l'aiguille d'échantillonnage est positionné dans la chambre d'échantillonnage, que les première et deuxième entrées du bâti d'interface et la sortie du bâti adsorbant sont fermées, et que l'entrée du bâti adsorbant est ouverte, le fluide s'écoule dans le deuxième conduit d'écoulement, où les substances à analyser sont désorbées, dans le premier conduit d'écoulement, et dans la colonne de chromatographie.

7. Montage d'interface pour la pré-concentration de substances à analyser selon la revendication 1, comprenant en outre :
- Une passage au travers duquel le fluide est communiqué du deuxième conduit (44) d'écoulement à la sortie (66) du bâti (22) adsorbant, et au travers duquel le fluide est communiqué de l'entrée (64) du bâti adsorbant au deuxième conduit (44) d'écoulement ; et
- Une soupape située dans ledit passage pour basculer entre l'entrée et la sortie du bâti adsorbant.

8. Montage d'interface pour la pré-concentration de substances à analyser selon la revendication 1, dans lequel ledit bâti (20) d'interface et ledit bâti adsorbant (22) ont des portions correspondantes filetées pour connecter le bâti adsorbant au bâti d'interface.

9. Montage d'interface pour la pré-concentration de substances à analyser selon la revendication 1, dans lequel ledit bâti (22) adsorbant est formée d'un seul tenant avec ledit bâti (20) d'interface.

10. Montage d'interface pour la pré-concentration de substances à analyser selon la revendication 1, dans lequel ledit bâti (22) adsorbant est réglable en température.

11. Montage d'interface pour la pré-concentration de substances à analyser selon la revendication 1, dans lequel au moins un adsorbant (60) est hydrophobe.

12. Montage d'interface pour la pré-concentration de substances à analyser selon la revendication 11, dans lequel au moins un adsorbant (60) comprend du noir de carbone.

13. Montage d'interface pour la pré-concentration de substances à analyser selon la revendication 11, dans lequel au moins un adsorbant (60) comprend un adsorbant polymère.

14. Montage d'interface pour la pré-concentration de substances à analyser selon la revendication 11, dans lequel au moins un adsorbant (60) comprend un tamis moléculaire carboné.

15. Montage d'interface pour la pré-concentration de substances à analyser selon la revendication 1, dans lequel :
- Ledit au moins un adsorbant comprend un premier et un second adsorbant (60, 62) ;
- ledit second adsorbant (62) est plus fort que ledit premier adsorbant (60) ; et
- ledit premier adsorbant est disposé entre ledit deuxième conduit sans soupape et ledit deuxième adsorbant.

16. Montage d'interface pour la pré-concentration de substances à analyser selon la revendication 1, dans lequel le premier conduit (40) d'écoulement présente un diamètre compris entre 0,1 et 1 mm.

17. Montage d'interface pour la pré-concentration de substances à analyser selon la revendication 14, dans lequel le premier conduit (40) d'écoulement présente un diamètre d'environ 0,5 mm.
